# EUROPEAN PATENT APPLICATION

(11) **EP 4 831 091 A1**
(43) Date of publication of application: **28.10.2026**
(21) Application number: 26173229.1
(22) Date of filing: 20.04.2026
(51) Int. Cl.: B65G 1/06, B65G 1/137

(54) **AUTOMATED WAREHOUSE**

(30) Priority: 24.04.2025 JP 2025072473
(71) Applicant: Daifuku Co., Ltd., Osaka-shi, Osaka 555-0012 (JP)
(72) Inventor: ICHIKAWA, Kodai, Tokyo, 1050022 (JP); MIYAMOTO, Masaya, Tokyo, 1050022 (JP); IWAI, Masami, Tokyo, 1050022 (JP); KATO, Kenji, Tokyo, 1050022 (JP)
(74) Representative: Grosse, Felix Christopher

(57) **Abstract**

An automated warehouse 100 includes a storage facility 1 that stores articles W, a transport facility 2 that transports the articles W, a receiving section 3, multiple issuing sections 4, connected paths 15A connected to the issuing sections 4, unconnected paths 15B unconnected to the issuing sections 4, and a control system 5 that refers to a type-based issue frequency upon determining storage sites for received articles W. The type-based issue frequency is the number of articles W per type issued from the issuing sections 4 per unit period. The control system 5 determines the storage sites for the articles W received through the receiving section 3 to cause, in comparison of articles W stored at same positions in a Y-direction, articles W stored along the connected paths 15A to have a higher type-based issue frequency than articles W stored along the unconnected paths 15B.

## Description

The present invention relates to an automated warehouse including a storage facility that stores multiple articles, a transport facility that transports articles within the storage facility, a receiving section in which articles are received into the storage facility, and an issuing section in which articles are issued from the storage facility.

An example of such an automated warehouse is described in WO 2023 / 176 195 A1. In the background to the present invention described below, reference signs and names in parentheses are the reference signs and the names in WO 2023 / 176 195 A1.

The automated warehouse (automated warehouse system 100) described in WO 2023 / 176 195 A1 includes a storage facility (automated warehouse group 110) that stores multiple articles (packages 200), a transport facility (transport means 130) that transports the articles (packages 200), and multiple issuing sections (stations 120) at which articles (packages 200) are issued from the storage facility (automated warehouse group 110) using the transport facility (transport means 130).

The automated warehouse (automated warehouse system 100) described in WO 2023 / 176 195 A1 determines the storage sites for multiple articles (packages 200) by article type to improve transport efficiency for issuing articles (packages 200). More specifically, articles with a lower type-based issue frequency (low-ranked products) are stored farther from the issuing sections (stations 120) than articles with a higher type-based issue frequency (high-ranked product) are. The type-based issue frequency is the number of articles issued from the issuing sections (stations 120) per unit period. The structure shortens the distance by which the transport facility (transport means 130) transports articles (packages 200) to issue articles having a higher type-based issue frequency (high-ranked products).

In the automated warehouse (automated warehouse system 100) described in WO 2023 / 176 195 A1, the route for moving articles (package 200) between the issuing sections (stations 120) and the storage facility (automated warehouse group 110) using the transport facility (transport means 130) can be set freely. This can complicate the route setting, and may extend the distance by which the transport facility (transport means 130) transports articles (package 200) to receive and issue articles. Thus, the automated warehouse (automated warehouse system 100) described in WO 2023 / 176 195 A1 may still improve transport efficiency for articles (package 200) with the transport facility (transport means 130).

An object of the present invention is, thus, to provide an automated warehouse that can easily improve transport efficiency for articles with a transport facility.

A technique responding to the above issue is described below.

According to one aspect of the present invention, an automated warehouse includes a storage facility including N Y-directional paths extending in a Y-direction and arranged in an X-direction, where N is a natural number greater than or equal to 2. The storage facility stores a plurality of articles along each of the N Y-directional paths. The X-direction and the Y-direction intersect with each other as viewed in a vertical direction. The automated warehouse includes a transport facility that transports the plurality of articles along each of the N Y-directional paths and transports the plurality of articles in the X-direction across the N Y-directional paths, a receiving section in which the plurality of articles are received into the storage facility using the transport facility, M issuing sections in which the plurality of articles are issued from the storage facility using the transport facility, where M is a natural number less than N, and a control system that controls the transport facility. The N Y-directional paths include M Y-directional paths being connected paths each connected to a corresponding issuing section of the M issuing sections, and (N - M) Y-directional paths being unconnected paths unconnected to the M issuing sections. The control system determines storage sites for the plurality of articles received through the receiving section to cause, in comparison of articles stored at same positions in the Y-direction, articles stored along the connected paths to have a higher type-based issue frequency than articles stored along the unconnected paths. The type-based issue frequency is a number of articles per type issued from the M issuing sections per unit period.

In this structure, articles with a relatively high type-based issue frequency are stored along the connected paths whereas articles with a relatively low type-based issue frequency are stored along the unconnected paths. Each connected path is connected to the corresponding issuing section. Thus, articles with a relatively high type-based issue frequency can be transported rapidly to the issuing sections for issue using the transport facility. Although the articles stored along the unconnected paths take longer to be transported to the issuing sections than the articles stored along the connected paths, articles with a relatively low type-based issue frequency are stored in such storage sites. This reduces the frequency of time-taking transport. This easily improves transport efficiency for articles with the transport facility.

According to another aspect of the present invention, an automated warehouse includes a storage facility including N Y-directional paths extending in a Y-direction and arranged in an X-direction, where N is a natural number greater than or equal to 2. The storage facility stores a plurality of articles along each of the N Y-directional paths. The X-direction and the Y-direction intersect with each other as viewed in a vertical direction. The automated warehouse includes a transport facility that transports the plurality of articles along each of the N Y-directional paths and transports the plurality of articles in the X-direction across the N Y-directional paths, a receiving section in which the plurality of articles are received into the storage facility using the transport facility, M issuing sections in which the plurality of articles are issued from the storage facility using the transport facility, where M is a natural number less than N, and a control system that controls the transport facility. The N Y-directional paths include M Y-directional paths being connected paths each connected to a corresponding issuing section of the M issuing sections, and (N - M) Y-directional paths being unconnected paths unconnected to the M issuing sections. The control system determines storage sites for the plurality of articles received through the receiving section to cause articles stored along the connected paths to have a higher type-based issue frequency than articles stored along the unconnected paths on average. The type-based issue frequency is a number of articles per type issued from the M issuing sections per unit period.

In this structure, the articles stored along the connected paths have a higher type-based issue frequency than the articles stored along the unconnected paths on average. Each connected path is connected to the corresponding issuing section. Thus, articles with a relatively high type-based issue frequency can be transported rapidly to the issuing sections for issue using the transport facility. Although the articles stored along the unconnected paths take longer to be transported to the issuing sections than the articles stored along the connected paths, articles with a relatively low type-based issue frequency are stored in such storage sites. This reduces the frequency of time-taking transport. This easily improves transport efficiency for articles with the transport facility.

Preferably, the control system may set a first area and a second area in a storage area for the articles along the connected paths. The second area is farther from the M issuing sections than the first area is. The control system may determine the storage sites for the plurality of articles to cause articles stored in the first area to have a higher type-based issue frequency than articles stored in the second area.

In this structure, articles with a higher type-based issue frequency are stored closer to the issuing sections in the storage area along the connected paths connected to the issuing sections. This allows articles with a relatively high type-based issue frequency to be transported rapidly to the issuing sections for issue using the transport facility. This easily improve transport efficiency for articles with the transport facility.

Preferably, at least one of the unconnected paths may be connected to the receiving section.

In this structure, articles received through the receiving section can be transported using the unconnected paths. This structure thus easily allows size reduction of the automated warehouse compared with a structure including a receiving section at a position unconnected to any unconnected path.

Preferably, the control system may preset a plurality of issue frequency ranks corresponding to levels of the type-based issue frequency, and determine the storage sites for the plurality of articles based on the plurality of issue frequency ranks for each type of articles.

This structure can appropriately determine the storage sites for the articles received through the receiving section based on the level of the type-based issue frequency of each article received through the receiving section.

Preferably, the control system may divide an entire storage area for the plurality of articles in the storage facility into a plurality of management areas arranged in the X direction, and determine the storage sites for the plurality of articles to cause numbers of articles per type stored in the plurality of respective management areas to be at least substantially equal to each other.

This structure increases the frequency of article transport performed in the management areas. This can easily shorten the transport distance of articles in the X-direction, thus further improving transport efficiency for articles with the transport facility.

Further features and advantageous effects of the technique according to the present invention will be apparent from exemplary and nonlimiting embodiments of the present invention described below with reference to the drawings, wherein
- Fig. 1: is a schematic perspective view of an automated warehouse according to an embodiment of the present invention;
- Fig. 2: is a plan view of a reference layer shown in Fig. 1;
- Fig. 3: is a diagram illustrating storage site determination in a first example;
- Fig. 4: is a diagram illustrating storage site determination in a second example;
- Fig. 5: is a diagram illustrating example storage sites for articles to be stored in a storage area;
- Fig. 6: is a diagram illustrating an example of article receipt; and
- Fig. 7: is a diagram illustrating an example of article issue.

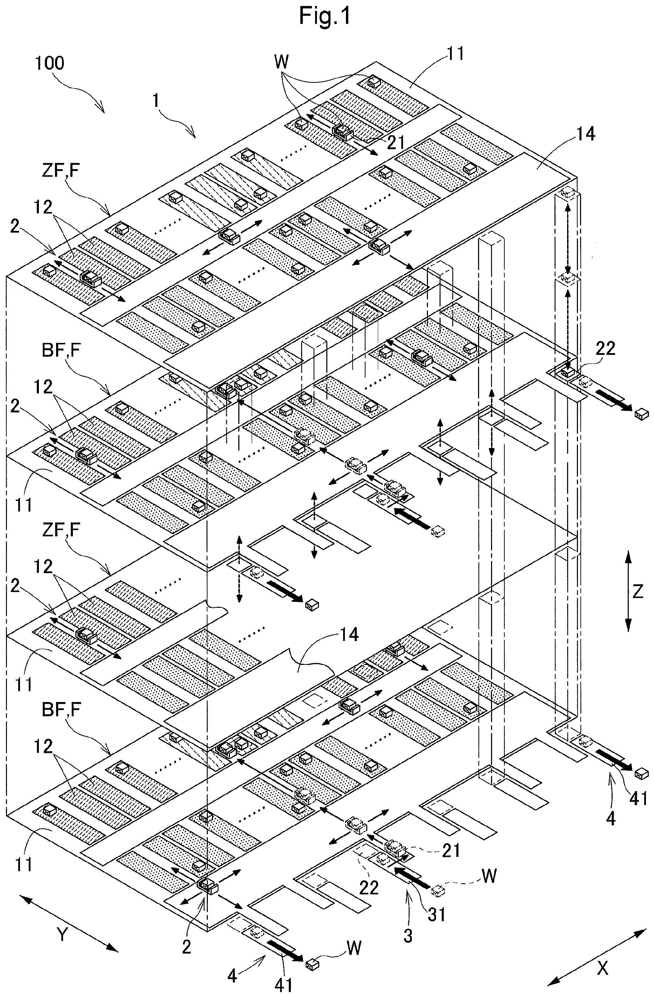

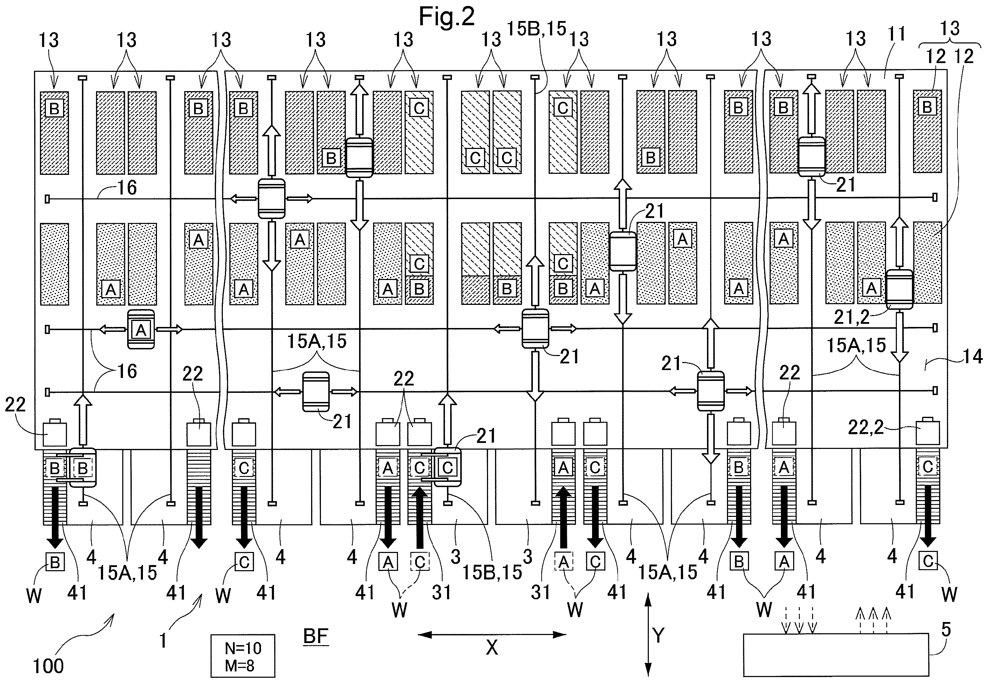

An automated warehouse 100 according to one or more embodiments of the present invention will now be described with reference to Figs. 1 and 2.

Fig. 1 is a schematic three-dimensional view of the entire automated warehouse 100. Fig. 2 is a plan view of a layer F (described later) in the automated warehouse 100 shown in Fig. 1. The layer F is the lowest layer F on the page of the figure.

As shown in Fig. 1, the automated warehouse 100 is used for storing multiple articles W. Articles W transferred into the automated warehouse 100 are transported to predetermined storage sites within the automated warehouse 100 for storage, without manual intervention of operators. Articles W stored within the automated warehouse 100 are automatically transported to predetermined issuing sites outside the automated warehouse 100, without manual intervention of operators.

The above movement of articles W relative to the automated warehouse 100 is herein described using article receipt and article issue. Article receipt includes transferring articles W to storage sites within the automated warehouse 100. Article issue includes transferring articles W stored in the automated warehouse 100 out of the automated warehouse 100.

The automated warehouse 100 stores multiple types of articles W. Although the articles W may have any appearance, the articles W in the present embodiment are loaded boxes. Each figure shows the articles W without distinguishing loads and boxes. The types of articles W are distinguished by, for example, the product name, the lot, the expiration date, and other characteristics. The automated warehouse 100 according to the present embodiment sets the storage site for each article W based on the issue frequency of the articles W to minimize the total distance traveled by all the articles W within the automated warehouse 100 upon article receipt or article issue. In the examples in Figs. 1 to 7, three types of articles W are stored in the automated warehouse 100. For ease of explanation, the three types of articles W are referred to as first articles, second articles, and third articles. In Figs. 1 to 5, the first articles are each marked with A in the frame representing the article W. The second articles are each marked with B in the frame representing the article W. The third articles are each marked with C in the frame representing the article W.

The structure of the automated warehouse 100 will now be described.

The directions perpendicular to each other as viewed in a vertical direction Z are herein referred to as an X-direction and a Y-direction to describe the positional relationships between components. The X-direction and the Y-direction are indicated by arrows with letters X and Y in each figure. In Fig. 1, the X-direction extends along a horizontal plane. In Fig. 1, the Y-direction extends along the horizontal plane and perpendicular to the X-direction. Each of the X-direction and the Y-direction may extend along a plane inclined in the vertical direction Z with respect to the horizontal plane.

As shown in Figs. 1 and 2, the automated warehouse 100 includes a storage facility 1 that stores multiple articles W, a transport facility 2 that transports articles W within the storage facility 1, receiving sections 3, M issuing sections 4 (M is a natural number less than N described later), and a control system 5 (refer to Fig. 2). At the receiving sections 3, articles W are received into the storage facility 1. At the issuing sections 4, articles W are issued from the storage facility 1. The control system 5 controls the transport facility 2.

As shown in Fig. 1, the storage facility 1 includes one or more layers F and a storage area 11 in each layer F. In the present embodiment, the storage facility 1 includes multiple layers F. Each of the multiple layers F includes the storage area 11. As shown in Figs. 1 and 2, the storage area 11 extends in the X-direction and the Y-direction. Articles W are stored in the storage area 11. Fig. 1 shows, as an example of the storage facility 1, shelves that can store articles W.

The multiple layers F are arranged in the vertical direction Z. As shown in Fig. 1, each layer F extends along a horizontal plane perpendicular to the vertical direction Z. Examples of the layers F include imaginary planes defined at different specific positions (heights) in the vertical direction Z and floor surfaces defining the layers of a multi-layer building. The automated warehouse 100 according to the present embodiment includes multiple columns and structural members joined to one another. Each layer F extends along an imaginary plane defined at each specific position in the vertical direction Z.

The transport facility 2 transports articles W received into the storage facility 1 and articles W to be issued from the storage facility 1 in the storage area 11. In the present embodiment, the transport facility 2 transports articles W within the storage area 11 defined on each of the multiple layers F and across the storage areas 11 defined on the respective multiple layers F.

At the receiving sections 3, articles W are received into the storage facility 1 with the transport facility 2. The receiving sections 3 are at positions reachable by the transport facility 2. In the present embodiment, the receiving sections 3 are adjacent to the storage area 11 in the Y-direction.

In the present embodiment, multiple receiving sections 3 are disposed at different heights. More specifically, the receiving sections 3 are at positions corresponding to the respective layers F. In the present embodiment, the receiving sections 3 are at respective positions reachable by the transport facility 2 that transports articles W in each of multiple storage areas 11 among all the storage areas 11. More specifically, the receiving sections 3 are disposed at the same heights as the respective multiple (two in the example shown in Fig. 1) layers F among all the layers F included in the storage facility 1. In the example shown in Fig. 1, one of the receiving sections 3 is disposed at a height corresponding to the lowest layer F on the page of the figure, and another receiving section 3 is disposed at a height corresponding to the layer F shown in the middle of the page. One or more receiving sections 3 are disposed at the same height. In the present embodiment, multiple receiving sections 3 (two in the example shown in Fig. 2) are disposed at a height corresponding to each layer F.

Each receiving section 3 is an area including a receiving device 31. The receiving device 31 receives articles W to be received into the storage area 11 from an operating entity and transfers the articles W to a transport vehicle 21 or a lifting transport device 22. The receiving device 31 includes, for example, a belt conveyor, a roller conveyor, another conveyor device, or a picking station. As described later, a conveyor device serving as the receiving device 31 transports articles W to a position at which the articles W are transferred to at least one of the transport vehicle 21 or the lifting transport device 22 included in the transport facility 2. A picking station serving as the receiving device 31 is a station at which an operator or a robot picks an intended article W from multiple articles W received from an operating entity and transfers the picked article W to at least one of the transport vehicle 21 or the lifting transport device 22. Examples of the operating entity that transfers articles W to the receiving device 31 include an operator and a robot that transfer articles W to the receiving device 31. Each receiving section 3 includes the position at which articles W are transferred between the transport facility 2 and the receiving device 31 and other positions and devices used for article receipt.

At the issuing sections 4, articles W are issued from the storage facility 1 with the transport facility 2. Similarly to the receiving sections 3, the issuing sections 4 are at positions reachable by the transport facility 2. In the present embodiment, the issuing sections 4 are adjacent to the storage area 11 in the Y-direction. In the present embodiment, the issuing sections 4 overlap the receiving sections 3 as viewed in the X-direction.

The M issuing sections 4 are distributed in the X-direction. In the present embodiment, the M issuing sections 4 (M = 8 in the example shown in Fig. 2) are arranged in the X-direction at positions overlapping one another as viewed in the X-direction. In the present embodiment, the issuing sections 4 are at the respective positions on both sides of the receiving sections 3 in the X-direction.

In the present embodiment, the issuing sections 4 are at positions corresponding to each of the multiple layers F. In other words, the issuing sections 4 are disposed at different heights. In the example shown in Fig. 1, the issuing sections 4 are at the respective positions reachable by the transport facility 2 that transports articles W in each of multiple storage areas 11 among all the storage areas 11. More specifically, the issuing sections 4 are disposed at the same heights as the respective multiple (two in the example shown in Fig. 1) layers F among all the layers F included in the storage facility 1. As shown in Fig. 2, a set of issuing sections 4 including multiple (eight in the example shown in Fig. 2) issuing sections 4 is disposed on some of the layers F. In the present embodiment, the issuing sections 4 are disposed at the same height as the receiving sections 3 as shown in Fig. 1. A set of issuing sections 4 is disposed at a height corresponding to the lowest layer F on the page of the figure, and another set of issuing sections 4 is disposed at a height corresponding to the layer F shown in the middle of the page. For ease of explanation, each layer F corresponding to the height at which the issuing sections 4 are disposed is referred to as an issuing layer BF, and each layer F other than the issuing layers BF is referred to as a storage layer ZF.

Each issuing section 4 is an area including an issuing device 41. The issuing device 41 is, for example, a belt conveyor, a roller conveyor, another conveyor device, or a picking station, similarly to the receiving device 31. The conveyor device includes an issue conveyor for transporting articles W received from at least one of the transport vehicle 21 or the lifting transport device 22 to a position at which the articles W are transferred to an operating entity. A picking station serving as the issuing device 41 is a station at which an operator or a robot picks an intended article W from articles W received from at least one of the transport vehicle 21 or the lifting transport device 22 and transfers the picked article W to an operating entity. The operating entity that receives articles W from the issuing section 4 may be an operator or a robot that transports articles W issued from the automated warehouse 100 to shipping locations. Each issuing section 4 includes the position at which articles W are transferred between the transport facility 2 and the issuing device 41, and other positions and devices for article issue.

As shown in Fig. 2, each storage area 11 includes multiple storages 12 that store articles W and a transport path 14 for transporting articles W to the storages 12.

The storages 12 are distributed within the storage area 11. More specifically, the storages 12 are disposed at intervals in the X-direction and the Y-direction. In the present embodiment, the storages 12 in the storage area 11 disposed on the issuing layer BF overlap the receiving sections 3 or the issuing sections 4, or both as viewed in the Y-direction.

Each storage 12 includes a support surface on which articles W can be placed. The support surface is a flat surface supported by posts or other structural members. The support surface has an area sized to receive multiple articles W in the X-direction and the Y-direction. The size of the support surface is determined based on, for example, the weight of the article W supported by the support surface and the structure of the structural members supporting the support surface. The storages 12 illustrated in Figs. 1 and 2 each have the support surface sized to receive two articles W in the Y-direction. The support surface may support, for example, the entire lower surface of each article W. Such a support surface is a flat plate. The support surface may include, for example, multiple surfaces supporting multiple portions of the lower surface of the article W. Such a support surface may include, for example, a pair of rails that support two positions of the lower surface of the article W at an interval in the width direction.

The transport path 14 is disposed in the storage area 11 to pass through the positions at which articles W are transferred between the storages 12 and the transport facility 2, the receiving sections 3, and the issuing sections 4. The transport entities included in the transport facility 2 move along the transport path 14 to transport articles W between the storages 12, the receiving sections 3, and the issuing sections 4. The transport path 14 includes, for example, rails that guide transport vehicles 21 (described later), which are examples of the transport entities. In the present embodiment, the transport path 14 includes N Y-directional paths 15 (N is a natural number greater than or equal to 2) and multiple X-directional paths 16.

The Y-directional paths 15 extend in the Y-direction. The Y-directional paths 15 are arranged at intervals in the X-direction.

Multiple articles W are stored along each Y-directional path 15. In the present embodiment, each Y-directional path 15 extends in the Y-direction through positions adjacent to the corresponding storages 12 in the X-direction. In the present embodiment, the positions at which articles W are transferred between the storages 12 and the transport facility 2 are adjacent to the storages 12 in the X-direction, as described in detail later. The Y-directional paths 15 illustrated in Fig. 2 are disposed in the storage area 11 to pass the positions at which the articles W are transferred between the storages 12 and the transport facility 2, without intersecting with one another.

The Y-directional paths 15 include at least a connected path 15A and an unconnected path 15B.

The N Y-directional paths 15 include M connected paths 15A. Each of the M connected paths 15A is connected to the corresponding issuing section 4. In the present embodiment, the issuing sections 4 are disposed at positions through which the connected paths 15A pass. In the example shown in Fig. 2, eight connected paths 15A each have its first end (downward end on the page) overlapping the corresponding issuing section 4 as viewed in the vertical direction Z.

The unconnected paths 15B are (N - M) Y-directional paths 15 other than the connected paths 15A. The (N - M) unconnected paths 15B are not connected to any issuing sections 4. In the present embodiment, the receiving sections 3 are connected to at least one of the unconnected paths 15B. More specifically, the receiving sections 3 are disposed at positions through which the unconnected paths 15B pass. In the example shown in Fig. 2, the two unconnected paths 15B each have its first end (downward end on the page) overlapping the corresponding receiving section 3 as viewed in the vertical direction Z.

Each X-directional path 16 intersects with the Y-directional paths 15 as viewed in the vertical direction Z. In the present embodiment, the X-directional paths 16 extend in the X-direction. The X-directional paths 16 connect adjacent Y-directional paths 15. In this example, two paths being connected include two paths being in the positional relationship that allows the entities (e.g., the transport vehicles 21 described later) transporting articles W included in the transport facility 2 to access both of the two paths. The X-directional paths 16 illustrated in Fig. 2 connect all the Y-directional paths 15 included in the storage area 11.

In the present embodiment, the storage area 11 includes multiple (ten in the example shown in Fig. 2) storage groups 13 arranged in the X-direction. Each storage group 13 includes multiple (two in the example shown in Fig. 2) storages 12 arranged in the Y-direction. Each storage group 13 illustrated in Fig. 2 includes two storages 12 arranged in the Y-direction across an X-directional path 16. The multiple storage groups 13 are arranged in the X-direction with the Y-directional paths 15 and intervals smaller than the width of the Y-directional paths 15 alternately arranged between the storage groups 13. On the issuing layer BF, each pair of storage groups 13 adjacent to each other at an interval larger than or equal to the width of the Y-directional paths 15 overlap the corresponding receiving section 3 or the corresponding issuing section 4 as viewed in the Y-direction.

In the present embodiment, the multiple storage groups 13, the multiple Y-directional paths 15, and the multiple X-directional paths 16 are arranged in the storage area 11 to be symmetric in the X-direction about a reference Y-directional path 15. In the present embodiment, the multiple storage groups 13, the multiple Y-directional paths 15, the multiple X-directional paths 16, the multiple receiving sections 3, and the multiple issuing sections 4 are arranged on the issuing layer BF to be symmetric in the X-direction about the reference Y-directional path 15.

The transport facility 2 includes transport entities that transport articles W along each of the N Y-directional paths 15 and in the X-direction across the N Y-directional paths 15. The transport entities include a transport vehicle that mainly transports articles W horizontally, a lifter that mainly transports articles W in the vertical direction Z, and a device for other transport uses. In the present embodiment, the transport facility 2 includes the transport vehicles 21 that travel along the Y-directional paths 15 and the X-directional paths 16 to transport articles W. The transport vehicles 21 are disposed in each of the storage areas 11 on multiple layers F. In the present embodiment, the transport vehicles 21 move articles W within the storage area 11 on the corresponding layer F alone.

Each transport vehicle 21 includes a traveler and a transferrer. The traveler includes a chassis, multiple first wheels (not shown) that roll on the Y-directional paths 15, and multiple second wheels (not shown) that roll on rails installed along the X-directional paths 16. When the traveler travels along a Y-directional path 15, the first wheels roll on rails installed along the Y-directional path 15, with the second wheels being apart from the rails installed along the X-directional paths 16. When the traveler travels along an X-directional path 16, the second wheels roll on the rails installed along the X-directional path 16, with the first wheels being apart from the rails installed along the Y-directional paths 15. The transferrer includes a mount for receiving articles W and a pair of arms extendable toward the storages 12. The mount is a flat surface at the top of the chassis. The pair of arms are installed at the top of the chassis with the mount between them.

To move an article W placed on the top of the chassis to a storage 12, the pair of arms are extended toward the storage 12, with the article W hooked on tabs (not shown) protruding from the respective arms to the space in which the article W is placed. This causes the article W to move from the mount to the storage 12 in response to the movement of the tabs protruding from the pair of arms. To transfer an article W stored in a storage 12 onto the mount, the pair of arms extended toward the storage 12 are retracted with the article W hooked on the tabs protruding from the pair of arms to the space in which the article W is placed. This causes the article W to move from the storage 12 to the mount in response to the movement of the pair of arms.

In the present embodiment, the transport facility 2 transports articles W across multiple layers F. The transport facility 2 illustrated in Figs. 1 and 2 includes lifting transport devices 22 that transport articles W across the multiple layers F.

As shown in Fig. 2, each lifting transport device 22 includes posts extending in the vertical direction Z, a lifting platform that ascends and descends in the vertical direction Z along the posts, and a lifting transferrer (not shown) that ascends and descends together with the lifting platform. In the present embodiment, each lifting transport device 22 is disposed adjacent to the corresponding Y-directional path 15 in the X-direction. The lifting transport device 22 is at a position overlapping any of the storage groups 13 as viewed in the Y-direction.

In the present embodiment, the lifting transport devices 22 are distributed in the X-direction. More specifically, the lifting transport devices 22 are arranged in the X-direction at positions overlapping one another as viewed in the X-direction.

The lifting transport devices 22 are at positions at which the lifting transport devices 22 can transfer articles W to and from the receiving sections 3, the issuing sections 4, and the transport vehicles 21. In the present embodiment, each lifting transport device 22 is adjacent to the corresponding receiving section 3 or the corresponding issuing section 4 in the Y-direction and to the corresponding Y-directional path 15 in the X-direction. In the example shown in Fig. 2, each lifting transport device 22 is disposed between the corresponding receiving section 3 and any of the storage groups 13 or between the corresponding issuing section 4 and any of the storage groups 13.

The lifting platform stops at a position at which articles W can be transferred in the vertical direction Z to or from each transport vehicle 21 disposed on each floor F and to or from the corresponding receiving section 3 or the corresponding issuing section 4 disposed on each floor F. The lifting transferrer moves the transferred articles W toward the transport vehicles 21. Examples of the lifting transferrer include a conveyor installed on the top of the lifting platform and other transferrers. The lifting transferrer in the present embodiment picks up articles W placed on the transport vehicles 21 or the corresponding receiving device 31 or moves articles W to transfer the articles W to the corresponding issuing device 41 or the transport vehicles 21.

The control system 5 controls the transport vehicles 21 to at least cause the transport vehicles 21 to transport articles W between the receiving sections 3 and the storages 12 and between the issuing sections 4 and the storages 12. More specifically, the control system 5 causes the transport vehicles 21 to perform a transfer operation and a moving operation.

The control system 5 includes an arithmetic processor such as a microcomputer and peripheral circuits including a storage such as a memory. The functions of the control system 5 are implemented by hardware such as the arithmetic processor and a program executed on the hardware cooperating with each other. The control system 5 may be implemented by a single device or by multiple devices that can communicate with one another. For example, the control system 5 includes hardware mounted on each of the multiple transport vehicles 21 and hardware that can communicate with the hardware mounted on each transport vehicle 21.

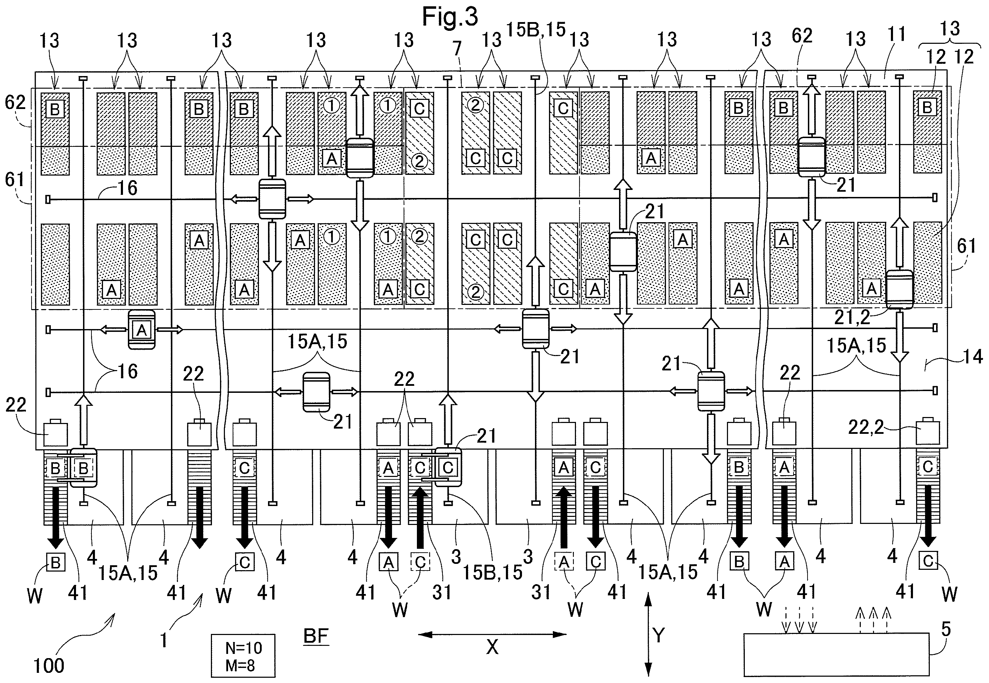

The processes performed by the control system 5 will now be described with reference to Figs. 3 to 8. The control system 5 performs storage site determination, article receipt, and article issue. The control system 5 may autonomously perform all the processes described below or perform the processes as instructed by an operator. The setting, the reference, and other operations of the control system 5 may be performed before each process or may be performed sequentially during each process.

As shown in Figs. 3 to 6, the storage site determination is a process for determining storage sites for articles W to be received into the storage facility 1. For ease of explanation, the example in Fig. 3 shows storage sites different from the storage sites shown in the other figures.

Upon performing the storage site determination, the control system 5 refers to type-based issue frequency of the articles W to be received. The type-based issue frequency is the number of articles W per type issued from the issuing sections 4 per unit period. The control system 5 refers to the type-based issue frequency in various manners. For example, the control system 5 refers to the type-based issue frequency stored in its storage device or the type-based issue frequency stored in another storage device connected on a communication network. In the examples shown in Figs. 3 to 7, three types of articles W are shown. The first articles have the highest type-based issue frequency. The type-based issue frequency decreases in the order of the first articles, the second articles, and the third articles.

The control system 5 determines the storage sites for the articles W received through the receiving sections 3 by comparing the articles W stored at the same positions in the Y-direction by type-based issue frequency. More specifically, the control system 5 determines the storage sites for the articles W to cause the articles W stored along the connected paths 15A to have a higher type-based issue frequency than the articles W stored along the unconnected paths 15B. In the present embodiment, as shown in Fig. 3 (refer to the middle portion on the page), the storages 12 in the storage groups 13 adjacent to the unconnected paths 15B in the X-direction store the third articles with the lowest type-based issue frequency. The storages 12 in the storage groups 13 adjacent to the connected paths 15A in the X-direction store the first articles and the second articles each with a higher type-based issue frequency than the third articles.

The control system 5 may refer to averaged type-based issue frequency of the articles W stored along the Y-directional paths 15. The averaged type-based issue frequency of the articles W stored along the Y-directional paths 15 is calculated using the multiple articles W stored in the storage groups 13 adjacent to one or more Y-directional paths 15. The example in Fig. 3 shows articles W to be used for calculating the averaged type-based issue frequency of the articles W stored along a connected path 15A that is a Y-directional paths 15 and articles W to be used for calculating the averaged type-based issue frequency of the articles W stored along an unconnected path 15B that is a Y-directional path 15. More specifically, the articles W stored along the connected path 15A are the articles W stored in the storages 12 disposed at a center-left position in Fig. 3 and labeled with the encircled number 1. The articles W stored along the unconnected path 15B are the articles W stored in the storages 12 disposed at a center position in Fig. 3 and labeled with the encircled number 2.

The control system 5 referring to the averaged type-based issue frequency determines the storage sites for the articles W received through the receiving sections 3 to cause the articles W stored along the connected path 15A to have a higher type-based issue frequency than the articles W stored along the unconnected path 15B on average. In the example shown in Fig. 3, all the multiple articles W stored in the storages 12 along the unconnected path 15B (the storages 12 labeled with the encircled number 2) are the third articles with the lowest type-based issue frequency. The control system 5 thus basically determines the storages 12 along the connected path 15A (the storages 12 labeled with the encircled number 1) to be the storage sites for the first articles and the second articles. The control system 5 may also determine the storages 12 along the connected path 15A (the storages 12 labeled with the encircled number 1) to be the storage sites for the third articles. In this case, the control system 5 may determine the storages 12 along the connected path 15A to be the storage sites for the third articles in quantities that do not cause the articles W stored in the storages 12 along the unconnected path 15B (the storages 12 labeled with the encircled number 2) to have a higher type-based issue frequency than the articles W stored in the storages 12 along the connected path 15A (the storages 12 labeled with the encircled number 1).

In the present embodiment, the control system 5 performs at least one of issue frequency ranking, connected area setting, unconnected area setting, or management area setting to determine article-reception sites that easily improve transport efficiency. The issue frequency ranking is performed upon determining article-reception sites. Other setting processes are performed during determination of article-reception sites. In the processes described below, the control system 5 may determine the storage sites by referring to the type-based issue frequency or the averaged type-based issue frequency.

The control system 5 performs the issue frequency ranking to preset multiple issue frequency ranks corresponding to the levels of the type-based issue frequency. The issue frequency can thus be distinguished clearly between types. In the example shown in Fig. 3, which handles three types of articles W, the control system 5 sets three issue frequency ranks and assigns the corresponding rank to each type of articles W. More specifically, the first articles have the highest issue frequency rank in the example shown in Fig. 3. The third articles have the lowest issue frequency rank, and the second articles have a lower issue frequency rank than the first articles and a higher issue frequency rank than the third articles. The control system 5 determines the storage sites for articles W based on the issue frequency rank of each type of articles W. More specifically, the control system 5 determines the storage sites for articles W to cause the articles W stored along the connected paths 15A to have a higher issue frequency rank than the articles W stored along the unconnected paths 15B. The control system 5 further determines the storage sites for articles W to cause, among the multiple articles W stored along the connected paths 15A, articles W with higher issue frequency ranks to be placed closer to the respective issuing sections 4. The distance expressed using closeness and farness from the issuing sections 4 herein refers to the physical distance and also to the time taken for the transport facility 2 to transport articles W to the issuing sections 4.

The control system 5 performs the connected area setting to divide the storage area 11 for the articles W along the connected paths 15A into a first area 61 and a second area 62. In other words, the control system 5 extracts, from the entire storage area 11, a zone including the connected paths 15A and the storages 12 adjacent to the connected paths 15A in the X-direction and divides the zone into multiple areas. The first area 61 is closer to the issuing sections 4. The second area 62 is farther from the issuing sections 4 than the first area 61 is. In the example shown in Fig. 3, the storage area 11 is divided into two areas, or specifically, the first area 61 and the second area 62, for each of the M connected paths 15A. With some of the M connection paths 15A being adjacent to each other, the control system 5 sets the first area 61 (the lower area on the page) and the second area 62 (the upper area on the page) as areas each including connected paths 15A adjacent to each other.

The control system 5 determines the storage sites for articles W to cause the articles W stored in the first area 61 to have a higher type-based issue frequency than the articles W stored in the second area 62. In the example shown in Fig. 3, the first area 61 stores the first articles, and the second area 62 stores the second articles with a lower type-based issue frequency than the first articles.

The control system 5 performs the unconnected area setting to extract, from the entire storage area 11, a zone including the unconnected paths 15B and the storages 12 adjacent to the unconnected paths 15B in the X-direction and set the zone as an unconnected area 7. In the example shown in Fig. 3, the unconnected area 7 is set for each of the (N - M) unconnected paths 15B. With the (N - M) unconnected paths 15B being adjacent to each other, the control system 5 sets the unconnected area 7 as an area including the unconnected paths 15B adjacent to each other.

The control system 5 determines the storage sites for articles W to cause the articles W stored in the unconnected area 7 to have a lower type-based issue frequency than the articles W with the highest type-based issue frequency among the articles W to be received. In this structure, the articles W with a relatively low type-based issue frequency are stored in the unconnected area 7. This allows the storages 12 adjacent to the connected paths 15A to be easily used as storage sites for the article W with the highest type-based issue frequency. In the example shown in Fig. 3, the control system 5 determines the storage sites to cause, among the articles W to be received, the third articles that are the articles W with the lowest type-based issue frequency to be stored in the unconnected area 7. In this structure, the articles W with the lowest type-based issue frequency are stored in the unconnected area 7. This allows the storages 12 adjacent to the connected paths 15A to be easily used as storage sites for the articles W with a relatively high type-based issue frequency.

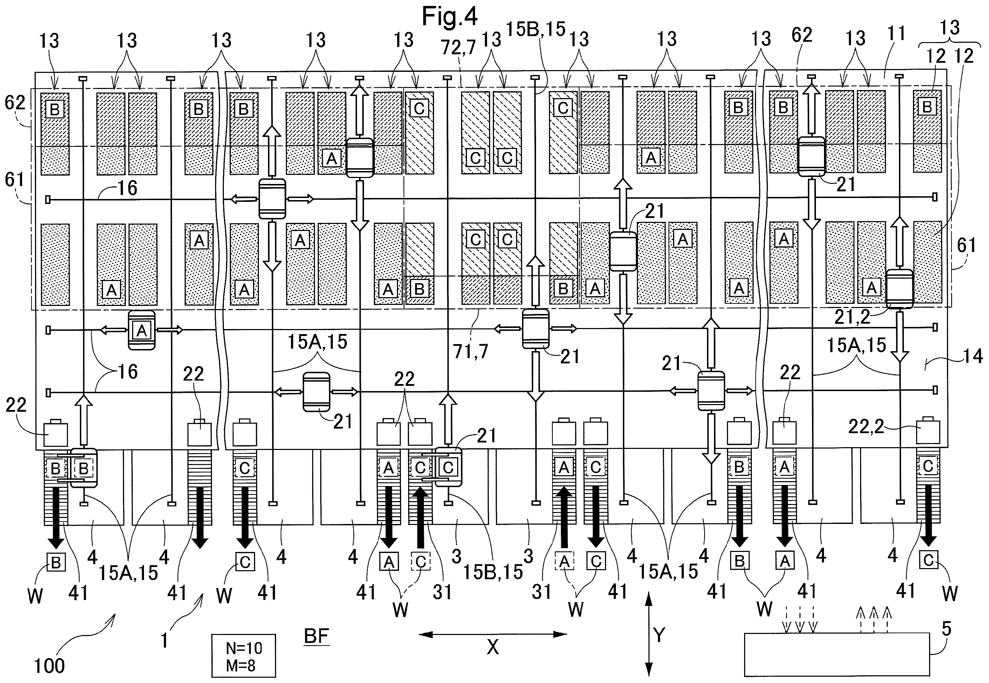

In some embodiments, the control system 5 divides the unconnected area 7 into multiple areas in the unconnected area setting, as shown in Fig. 4. The multiple areas are set based on the distance from the issuing sections 4. In the example shown in Fig. 4, the control system 5 divides the unconnected area 7 into a first unconnected area 71 and a second unconnected area 72. The first unconnected area 71 is closer to the issuing sections 4. The second unconnected area 72 is farther from the issuing sections 4 than the first unconnected area 71 is.

The control system 5 determines the storage sites for articles W to cause the articles W stored in the first unconnected area 71 to have a higher type-based issue frequency than the articles W stored in the second unconnected area 72. This structure can determine the sites in the unconnected area 7 relatively close to the issuing sections 4 as the storage sites for the articles W with a medium type-based issue frequency. This structure can easily shorten the transport distance of the articles W with a medium type-based issue frequency, further easily improving transport efficiency for articles W with the transport facility 2. In the example shown in Fig. 4, the first unconnected area 71 stores the second articles, and the second unconnected area 72 stores the third articles with a lower type-based issue frequency than the second articles.

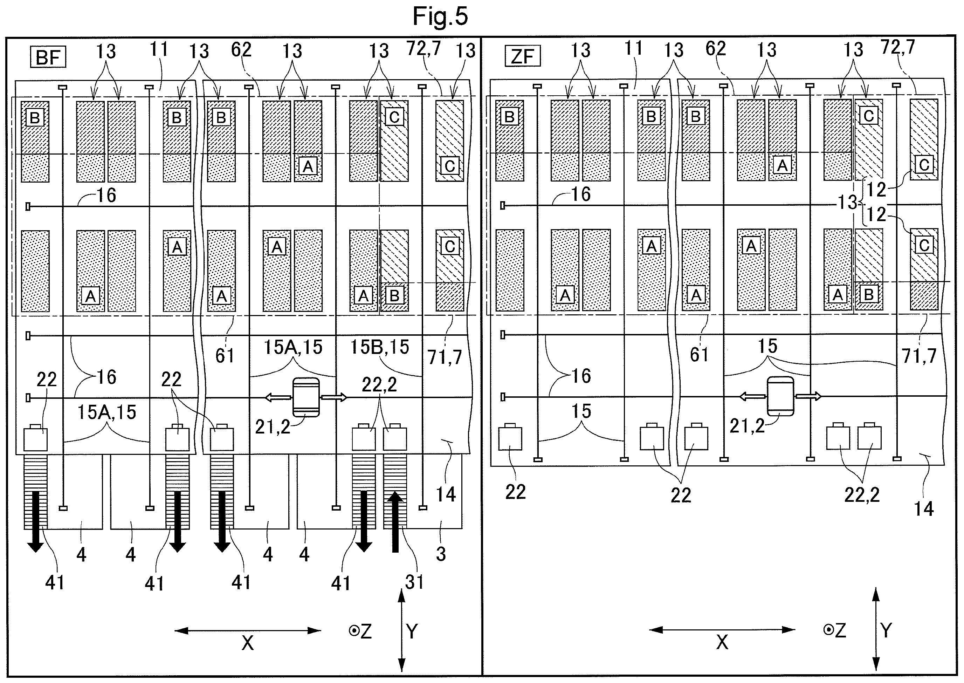

In some embodiments, the control system 5 sets the connected area and the unconnected area 7 three-dimensionally across multiple layers F, as shown in Fig. 5. In the example shown in Fig. 5, the issuing layer BF is shown on the left of the page, and the storage layer ZF is shown on the right of the page. In the example shown in Fig. 5, the first area 61, the second area 62, the first unconnected area 71, and the second unconnected area 72 that are set in the storage area 11 on the issuing layer BF extend to the storage layer ZF. More specifically, the first area 61, the second area 62, the first unconnected area 71, and the second unconnected area 72 on the storage layer ZF respectively overlap the first area 61, the second area 62, the first unconnected area 71, and the second unconnected area 72 in the issuing layer BF as viewed in the vertical direction Z.

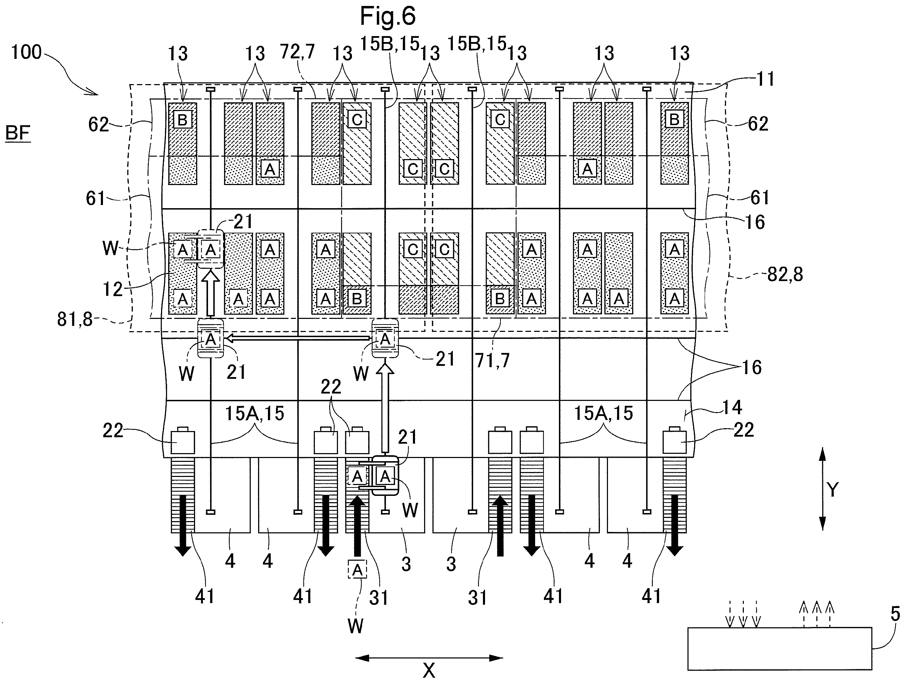

The control system 5 performs the management area setting to divide, an entire storage area 11 for the plurality of articles W in the storage facility 1 into a plurality of management areas 8 arranged in the X direction, as shown in Fig. 6. Each management area 8 includes one or more storages 12. Fig. 6 shows an example of the management area setting. The control system 5 divides the entire storage area 11 into two parts in the X-direction to set the management areas 8 in the two parts. More specifically, the control system 5 sets each management area 8 as an area including all the storages 12 disposed on one side in the X-direction, using a position between the two receiving sections 3 as a boundary. In the example shown in Fig. 6, the control system 5 sets management areas 8 each extending in the entire area in the Y-direction on either side in the X-direction, using a position between the two receiving sections 3 as a boundary. For ease of explanation, the management area 8 on the left of the page is hereafter referred to as a first management area 81, and the management area 8 on the right of the page is hereafter referred to as a second management area 82.

The control system 5 determines the storage site for each article W to allow the articles W of the same type to be stored in the multiple management areas 8 in a distributed manner. More specifically, the control system 5 determines the storage sites for the articles W to be received to cause at least one article W of the same type to be stored in a storage 12 in the respective management areas 8. This structure increases the likelihood that the articles W for issuing to be stored close to the issuing section 4 from which the articles W are issued.

In some embodiments, the control system 5 determines the storage sites for articles W to cause the numbers of articles W per type stored in the respective management areas 8 to be at least substantially equal to each other. In the present embodiment, the control system 5 determines the storage sites for all types of articles W to be received to cause the number of storage articles per type to be close to each other. In the example shown in Fig. 6, the multiple storages 12 included in the first management area 81 store as many second articles and as many third articles as the multiple storages 12 included in the second management area 82. The storages 12 included in the first management area 81 stores three fewer first articles than the storages 12 included in the second management area 82. In this case, the control system 5 sets the storages 12 included in the first management area 81 as the storage sites for the first articles to be received. More specifically, when five first articles are newly received into the storage facility 1, the control system 5 sets the first management area 81 as the storage sites for the three first articles received first. The control system 5 then assigns, as storage sites, the first management area 81 and the second management area 82 to the remaining two first articles. In this manner, nine first articles are eventually stored in each of the first management area 81 and the second management area 82.

In the present embodiment, the control system 5 determines the storage sites to cause articles W of the same type to be placed in the second management area 82 at positions that are symmetric in the X-direction with respect to the storage sites of the articles W in the first management area 81. The control system 5 may determine the storage sites to cause articles W of the same type to be placed in the second management area 82 at positions that are asymmetric in the X-direction with respect to the storage sites of the articles W in the first management area 81.

As shown in Fig. 6, the article receipt causes the transport facility 2 to perform a receiving operation.

As shown in Fig. 6, the control system 5 performs the article receipt to cause the transport facility 2 to store the articles W received through the receiving sections 3 into the storage area 11. More specifically, the control system 5 causes a transport vehicle 21 to pick up an article W in a receiving section 3 and transport the article W to any storage 12. In the example shown in Fig. 6, the transport vehicle 21 that has picked up a first article in a receiving section 3 transports the first article to a storages 12 included in the first area 61 that is set in the first management area 81.

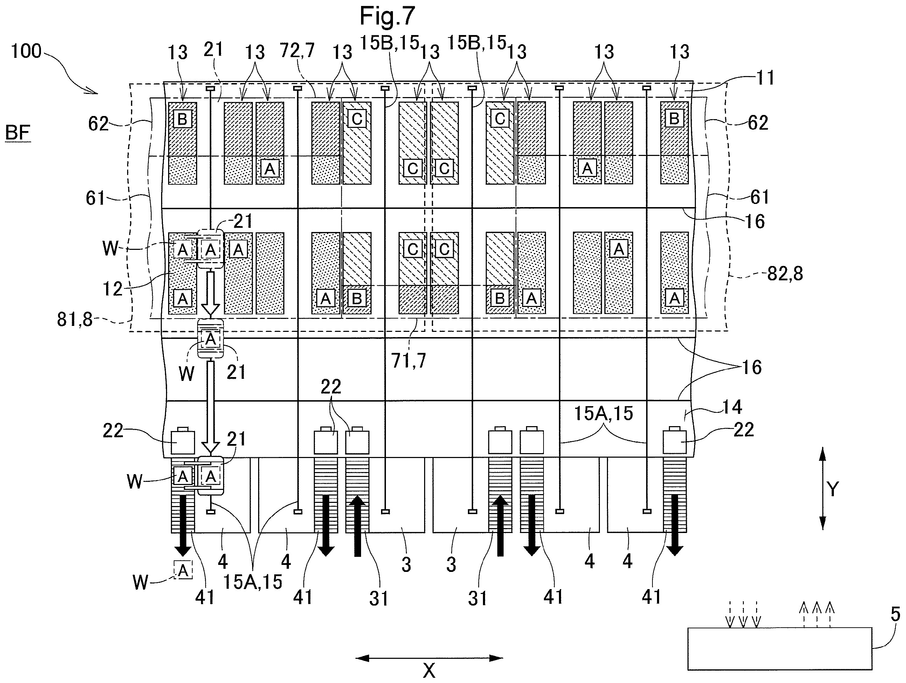

As shown in Fig. 7, the article issue causes the transport facility 2 to perform an issuing operation.

As shown in Fig. 7, the control system 5 performs the article issue to transport an article W stored in a storage 12 to an issuing section 4. More specifically, the control system 5 causes a transport vehicle 21 to pick up an article W from a storage 12 and transport the article W to any issuing section 4.

When an article W to be issued is stored in the unconnected area 7, the control system 5 sets the issuing section 4 connected to the unconnected path 15B adjacent to the storage 12 storing the article W as the issue destination. In this structure, the transport vehicles 21 can transport articles W to be issued to the issuing sections 4 by simply traveling on a single unconnected path 15B. This structure thus allows the transport vehicles 21 to travel a shorter distance than when the transport vehicles 21 transport articles W across different Y-directional paths 15. In the example shown in Fig. 7, the control system 5 causes a transport vehicle 21 to pick up a first article from a storage 12 included in the first area 61 that is set in the first management area 81. The transport vehicle 21 that has picked up the first article then travels in the Y-direction to transport the article W to an issuing section 4.

In the transport facility 2 in which the above processes are performed, the transport entities (transport vehicles 21 in the example shown in Fig. 7) may move faster in the Y-direction than in the X-direction. The transport entities move in the Y-direction more frequently in response to the transport facility 2 receiving an issuing instruction from the control system 5. The above structure thus easily shortens the time taken for issuing articles W.

Other embodiments of the automated warehouse 100 will now be described.

In the above embodiment, the storage facility 1 includes shelves for storing articles W. However, the storage facility 1 may include structures including a floor surface, the upper surface of a rack, and other surfaces on which articles W can be placed.

In the above embodiment, two receiving sections 3 are disposed at the same height. However, one receiving section 3 or more than two receiving sections 3 may be disposed at the same height.

In the above embodiment, the receiving sections 3 and the issuing sections 4 are disposed at the same height. However, the receiving sections 3 and the issuing sections 4 may be disposed at different heights.

In the above embodiment, the Y-directional paths 15 extend in the Y-direction through positions adjacent to the storages 12 in the X-direction. However, the storages 12 may be disposed on the Y-directional paths 15. In this case, the transport facility 2 causes, for example, transport vehicles that lift and lower articles W to travel along the Y-directional paths 15. The transport vehicles travel under the storages 12 to lift and lower articles W, transferring articles W to and from the storages 12.

In the above embodiment, the X-directional paths 16 connect all the Y-directional paths 15 included in the storage area 11. However, the X-directional paths 16 may connect some of the Y-directional paths 15. For example, the X-directional paths 16 may simply connect the unconnected paths 15B and the connected paths 15A, and may not connect the connected paths 15A to one another.

In the above embodiment, the transport vehicles 21 included in the transport facility 2 travel in the X-direction and the Y-direction in the storage area 11 to transfer articles W to and from the storages 12. However, the transport facility 2 may divide the storage area 11 into areas for different purposes, and may have different devices transporting articles W in the different areas. For example, the storage area 11 may be divided into a transfer area in which articles W can be transferred to and from the storages 12 and a transport area extending between the transfer area and the receiving sections 3 and between the transfer area and the issuing sections 4. The transport facility 2 may transport articles W in the transfer area using a stacker crane, and may transport articles W in the transport area using an automated guided vehicle. In this case, the transfer area is an area that is set between storage groups 13 adjacent to each other and in which the Y-directional paths 15 are set, and the transport area is an area in which the X-directional paths 16 are set.

In the above embodiment, the transport facility 2 includes, as its transport entities, the transport vehicles 21 that travel along the Y-directional paths 15 and the X-directional paths 16. However, the transport facility 2 may or may not include the transport entities that can move in both the X-direction and the Y-direction. For example, the transport facility 2 may include a transport entity that moves along the Y-directional paths 15 and a transport entity that moves along the X-directional paths 16. The transport entity that moves along the Y-directional paths 15 and the transport entity that moves along the X-directional paths 16 may each include multiple devices. For example, the transport entity that moves along the X-directional paths 16 may be a combination of a conveyor and a transport vehicle.

In the above embodiment, each connected path 15A has its first end (downward end on the page) overlapping the corresponding issuing section 4 as viewed in the vertical direction Z. However, the connected path may have its mid-position in the Y-direction overlapping the issuing section 4 as viewed in the vertical direction Z. Similarly, each unconnected path 15B may have its mid-position in the Y-direction overlapping the corresponding receiving section 3 as viewed in the vertical direction Z.

In the above embodiment, the unconnected paths 15B are connected to the receiving sections 3. However, the unconnected paths 15B may be connected to, instead of the receiving sections 3, chargers for charging transport entities that operate under power supply. The unconnected paths 15B may be connected to no objects. In some embodiments, the unconnected paths 15B may be a combination of an unconnected path 15B connected to a receiving section 3, an unconnected path 15B connected to a charger or another device for transport, and an unconnected path 15B connected to no object.

In the above embodiment, transport vehicles 21 travel on the rails defining the transport path 14. However, the transport path 14 may not include rails and may include a flat surface. In this case, the transport vehicles 21 may be, for example, automated guided vehicles that can travel on a floor surface.

In the above embodiment, the transport facility 2 includes lifting transport devices 22. However, the transport facility 2 may have the transport vehicles 21 that can move across multiple layers F, instead of including the lifting transport devices 22.

In the above embodiment, the multiple issuing sections 4 are arranged in the X-direction at positions overlapping one another as viewed in the X-direction. However, the issuing sections 4 may be disposed at different positions in the Y-direction without overlapping one another as viewed in the X-direction.

In the above embodiment, the control system 5 sets three issue frequency ranks. However, the control system 5 may set issue frequency ranks other than three levels. For example, the control system 5 may set two or more than three issue frequency ranks.

In the above embodiment, the control system 5 divides the storage area 11 for articles W along the connected paths 15A into two areas. However, the control system 5 may divide the storage area 11 into three or more areas.

In the above embodiment, each management area 8 covers the entire area extending in the Y-direction. However, the management area 8 may cover part of the area extending in the Y-direction.

In the above embodiment, the control system 5 that has performed the management area setting divides the entire storage area 11 in the X-direction into two management areas 8. However, the control system 5 may divide the entire storage area 11 into three or more management areas 8.

In the above embodiment, the control system 5 determines the storage sites for all types of articles W to be received to cause the number of storage articles per type to be close to each other. However, the control system 5 may treat some types of articles W as exceptions and determine the storage sites for the type of articles W to unevenly store such articles W into storages 12 included in any of the management areas 8.

The structures described in each of the above embodiments may be combined with any other structures described in other embodiments unless any contradiction arises. For other structures as well, the embodiments described herein are merely illustrative in all aspects. Thus, the embodiments described herein may be modified variously as appropriate without departing from the spirit and scope of the disclosure.

An overview of the automated warehouse according to the embodiments described above is provided below.

In one aspect, an automated warehouse includes a storage facility including N Y-directional paths extending in a Y-direction and arranged in an X-direction, where N is a natural number greater than or equal to 2. The storage facility stores a plurality of articles along each of the N Y-directional paths. The X-direction and the Y-direction intersect with each other as viewed in a vertical direction. The automated warehouse includes a transport facility that transports the plurality of articles along each of the N Y-directional paths and transports the plurality of articles in the X-direction across the N Y-directional paths, a receiving section in which the plurality of articles are received into the storage facility using the transport facility, M issuing sections in which the plurality of articles are issued from the storage facility using the transport facility, where M is a natural number less than N, and a control system that controls the transport facility. The N Y-directional paths include M Y-directional paths being connected paths each connected to a corresponding issuing section of the M issuing sections, and (N - M) Y-directional paths being unconnected paths unconnected to the M issuing sections. The control system determines storage sites for the plurality of articles received through the receiving section to cause, in comparison of articles stored at same positions in the Y-direction, articles stored along the connected paths to have a higher type-based issue frequency than articles stored along the unconnected paths. The type-based issue frequency is a number of articles per type issued from the M issuing sections per unit period.

In this structure, articles with a relatively high type-based issue frequency are stored along the connected paths whereas articles with a relatively low type-based issue frequency are stored along the unconnected paths. Each connected path is connected to the corresponding issuing section. Thus, articles with a relatively high type-based issue frequency can be transported rapidly to the issuing sections for issue using the transport facility. Although the articles stored along the unconnected paths take longer to be transported to the issuing sections than the articles stored along the connected paths, articles with a relatively low type-based issue frequency are stored in such storage sites. This reduces the frequency of time-taking transport. This easily improves transport efficiency for articles with the transport facility.

In one aspect, an automated warehouse includes a storage facility including N Y-directional paths extending in a Y-direction and arranged in an X-direction, where N is a natural number greater than or equal to 2. The storage facility stores a plurality of articles along each of the N Y-directional paths. The X-direction and the Y-direction intersect with each other as viewed in a vertical direction. The automated warehouse includes a transport facility that transports the plurality of articles along each of the N Y-directional paths and transports the plurality of articles in the X-direction across the N Y-directional paths, a receiving section in which the plurality of articles are received into the storage facility using the transport facility, M issuing sections in which the plurality of articles are issued from the storage facility using the transport facility, where M is a natural number less than N, and a control system that controls the transport facility. The N Y-directional paths include M Y-directional paths being connected paths each connected to a corresponding issuing section of the M issuing sections, and (N - M) Y-directional paths being unconnected paths unconnected to the M issuing sections. The control system determines storage sites for the plurality of articles received through the receiving section to cause articles stored along the connected paths to have a higher type-based issue frequency than articles stored along the unconnected paths on average. The type-based issue frequency is a number of articles per type issued from the M issuing sections per unit period.

In this structure, the articles stored along the connected paths have a higher type-based issue frequency than the articles stored along the unconnected paths on average. Each connected path is connected to the corresponding issuing section. Thus, articles with a relatively high type-based issue frequency can be transported rapidly to the issuing sections for issue using the transport facility. Although the articles stored along the unconnected paths take longer to be transported to the issuing sections than the articles stored along the connected paths, articles with a relatively low type-based issue frequency are stored in such storage sites. This reduces the frequency of time-taking transport. This easily improves transport efficiency for articles with the transport facility.

The control system may set a first area and a second area in a storage area for the articles along the connected paths. The second area is farther from the M issuing sections than the first area is. The control system may determine the storage sites for the plurality of articles to cause articles stored in the first area to have a higher type-based issue frequency than articles stored in the second area.

In this structure, articles with a higher type-based issue frequency are stored closer to the issuing sections in the storage area along the connected paths connected to the issuing sections. This allows articles with a relatively high type-based issue frequency to be transported rapidly to the issuing sections for issue using the transport facility. This easily improve transport efficiency for articles with the transport facility.

At least one of the unconnected paths may be connected to the receiving section.

In this structure, articles received through the receiving section can be transported using the unconnected paths. This structure thus easily allows size reduction of the automated warehouse compared with a structure including a receiving section at a position unconnected to any unconnected path.

The control system may preset a plurality of issue frequency ranks corresponding to levels of the type-based issue frequency, and determine the storage sites for the plurality of articles based on the plurality of issue frequency ranks for each type of articles.

This structure can appropriately determine the storage sites for the articles received through the receiving section based on the level of the type-based issue frequency of each article received through the receiving section.

The control system may divide an entire storage area for the plurality of articles in the storage facility into a plurality of management areas arranged in the X direction, and determine the storage sites for the plurality of articles to cause numbers of articles per type stored in the plurality of respective management areas to be at least substantially equal to each other.

This structure increases the frequency of article transport performed in the management areas. This can easily shorten the transport distance of articles in the X-direction, thus further improving transport efficiency for articles with the transport facility.

The technique according to one or more embodiments of the present disclosure is applicable to an automated warehouse including a storage facility that stores multiple articles, a transport facility that transports articles within the storage facility, a receiving section in which articles are received into the storage facility, and an issuing section in which articles are issued from the storage facility.

### REFERENCE SIGNS

- 1: Storage facility
- 2: Transport facility
- 3: Receiving section
- 4: Issuing section
- 5: Control system
- 7: Unconnected area
- 8: Management area
- 11: Storage area
- 12: Storage
- 13: Storage group
- 14: Transport path
- 15: Y-directional path
- 15A: Connected path
- 15B: Unconnected path
- 16: X-directional path
- 21: Transport vehicle
- 22: Lifting transport device
- 31: Receiving device
- 41: Issuing device
- 61: First area
- 62: Second area
- 71: First unconnected area
- 72: Second unconnected area
- 81: First management area
- 82: Second management area
- 100: Automated warehouse

- BF: Issuing layer
- F: Layer
- W: Article
- X: X-direction
- Y: Y-direction
- Z: Vertical direction
- ZF: Storage layer

## Claims

1. An automated warehouse (100), comprising:
a storage facility (1) including N Y-directional paths (15) extending in a Y-direction and
arranged in an X-direction, where N is a natural number greater than or equal to 2, the storage facility (1) being configured to store a plurality of articles (W) along each of the N Y-directional paths (15), the X-direction and the Y-direction intersecting with each other as viewed in a vertical direction (Z);
a transport facility (2) configured to transport the plurality of articles (W) along each of the N Y-directional paths (15) and transport the plurality of articles (W) in the X-direction across the N Y-directional paths (15);
a receiving section (3) in which the plurality of articles (W) are received into the storage facility (1) using the transport facility (2);
M issuing sections (4) in which the plurality of articles (W) are issued from the storage facility (1) using the transport facility (2), where M is a natural number less than N; and
a control system (5) configured to control the transport facility (2), **characterized in that** the N Y-directional paths (15) include
M Y-directional paths (15) being connected paths (15A) each connected to a corresponding issuing section (4) of the M issuing sections (4), and
(N - M) Y-directional paths (15) being unconnected paths (15B) unconnected to the M issuing sections (4), and
the control system (5) is configured to determine storage sites for the plurality of articles (W) received through the receiving section (3) to cause, in comparison of articles (W) stored at same positions in the Y-direction, articles (W) stored along the connected paths (15A) to have a higher type-based issue frequency than articles (W) stored along the unconnected paths (15B),
the type-based issue frequency being a number of articles (W) per type issued from the M issuing sections (4) per unit period.

2. An automated warehouse (100), comprising:
a storage facility (1) including N Y-directional paths (15) extending in a Y-direction and
arranged in an X-direction, where N is a natural number greater than or equal to 2, the storage facility (1) being configured to store a plurality of articles (W) along each of the N Y-directional paths (15), the X-direction and the Y-direction intersecting with each other as viewed in a vertical direction (Z);
a transport facility (2) configured to transport the plurality of articles (W) along each of the N Y-directional paths (15) and transport the plurality of articles (W) in the X-direction across the N Y-directional paths (15);
a receiving section (3) in which the plurality of articles (W) are received into the storage facility (1) using the transport facility (2);
M issuing sections (4) in which the plurality of articles (W) are issued from the storage facility (1) using the transport facility (2), where M is a natural number less than N; and
a control system (5) configured to control the transport facility (2), **characterized in that** the N Y-directional paths (15) include
M Y-directional paths (15) being connected paths (15A) each connected to a corresponding issuing section (4) of the M issuing sections (4), and
(N - M) Y-directional paths (15) being unconnected paths (15B) unconnected to the M issuing sections (4), and
the control system (5) is configured to determine storage sites for the plurality of articles (W) received through the receiving section (3) to cause articles (W) stored along the connected paths (15A) to have a higher type-based issue frequency than articles (W) stored along the unconnected paths (15B) on average, the type-based issue frequency being a number of articles (W) per type issued from the M issuing sections (4) per unit period.

3. The automated warehouse (100) according to claim 1 or 2, wherein
the control system (5) sets a first area (61) and a second area (62) in a storage area (11) for the articles (W) along the connected paths (15A), the second area (62) being farther from the M issuing sections (4) than the first area (61) is, and
the control system (5) determines the storage sites for the plurality of articles (W) to cause articles (W) stored in the first area (61) to have a higher type-based issue frequency than articles (W) stored in the second area (62).

4. The automated warehouse (100) according to any one of claims 1 to 3, wherein
at least one of the unconnected paths (15B) is connected to the receiving section (3).

5. The automated warehouse (100) according to any one of claims 1 to 4, wherein
the control system (5) presets a plurality of issue frequency ranks corresponding to levels of the type-based issue frequency, and determines the storage sites for the plurality of articles (W) based on the plurality of issue frequency ranks for each type of articles (W).

6. The automated warehouse (100) according to any one of claims 1 to 5, wherein
the control system (5) divides an entire storage area (11) for the plurality of articles (W) in the storage facility (1) into a plurality of management areas (8) arranged in the X direction, and determines the storage sites for the plurality of articles (W) to cause numbers of articles (W) per type stored in the plurality of respective management areas (8) to be at least substantially equal to each other.
